# EUROPÄISCHE PATENTANMELDUNG

(11) **EP 0 617 304 A1**
(43) Veröffentlichungstag der Anmeldung: **28.09.1994**
(21) Anmeldenummer: 94104371.3
(22) Anmeldetag: 19.03.1994
(51) Int. Cl.: G02B 6/44

(54) **Kassettenanordnung zum Verbinden und Verzweigen von Lichtwellenleitern der Tele- und Datenkommunikation**

(30) Priorität: 23.03.1993 CH 871/93
(71) Anmelder: Reichle + De-Massari AG Elektro-Ingenieure, 8620 Wetzikon (CH)
(72) Erfinder: Reichle, Hans, CH-8620/ Wetzikon (CH)
(74) Vertreter: Petschner, Goetz

(57) **Zusammenfassung**

Die Kassettenanordnung zum Verbinden und Verzweigen von Lichtwellenleitern der Tele- und Datenkommunikation umfasst eine Mehrzahl module und modular zu einem Block miteinander stapelbar verbindbare Kassetten (1,2,3) in Form von Spleisskassetten (1) und/oder Kopplerkassetten (2) und/oder Ueberlängenkassetten (3);
wobei die Kassetten untereinander und/oder zusammen mit Deckelteilen (4) über Scharniermittel (5) aufklappbar und verriegelbar miteinander verbunden sind,
wobei die Kassetten der Aufnahme von Kopplermodulen (2') und/oder Spleissmodulen (1') resp. die Ueberlängenkassetten der Aufnahme eines einsetzbaren Radiusbegrenzers (6) dienen; und wobei
sowohl die Bündelader (7) als auch die Schaltadern (8) im wesentlichen tangential zu den inneren Arbeitsreserveschleifen der Adern verlaufen und zudem die Schaltadern (8) intern oder extern von einer Kassette in die andere überführbar sind.

## Beschreibung

Die vorliegende Erfindung betrifft eine Kassettenanordnung zum Verbinden und Verzweigen von Lichtwellenleitern der Tele- und Datenkommunikation.

In den Signal-Uebertragungsbereichen der Technik, wie Telefonie, On-Line-Systeme und dgl. haben sich Lichtwellenleiter längst durchgesetzt.

Ueblich dabei ist, für den sogenannten Endverschluss Kassetten zu verwenden.

Eine solche Endverschluss-Anordnung beschreibt bereits die Europäische Patentanmeldung 0 474 091 der gleichen Anmelder, bei welcher ein Gehäuse eine aus zwei, in einer Ebene relativ zueinander verschiebbar miteinander verbundene Schalen bestehende stapelbare Kassette ist, in der mindestens eine Glasfaserkabel-Arbeitsreserve resp. -Spleissreserve schlaufen resp. kreisförmig und über einen Führungskanal nachschleppbar angeordnet ist. Dies gestattet, Kassette neben Kassette paketweise hochkant in einem Gestell anzuordnen und trotzdem eine umfassende Handhabung insbesondere inbezug auf die Verbindung hochempfindlicher Leitermittel zu erlauben, wobei ein Spleissen der Glasfaserkabel als auch ein individuelles Rangieren möglich ist, ohne dass am Glasfaserkabel mechanische und optische Störfaktoren auftreten können.

Bei einer weiteren Ausführungsform einer Endverschluss-Anordnung gemäss der Europäischen Patentanmeldung 0 288 808 der gleichen Anmelder umfasst das Gehäuse mindestens zwei, lösbar miteinander verbundene, Ebenen bildende Gehäuse-Teile, wobei der Innenraum der einen Gehäuse-Ebene der Aufnahme einer Arbeitsreserve eines Uebertragungskabels und der Innenraum der anderen Gehäuse-Ebene der Aufnahme von Spleiss-Reserven des Uebertragungskabels und/oder von Spleiss-Reserven von Stecker-Anschlussadern und/oder als Spleissraum dient. Dadurch können die Ader-Enden von Uebertragungskabel und Stecker absolut zugentlastet und leicht zugänglich innerhalb des Endverschluss-Gehäuses miteinander verbunden oder aber auch für Service und Aenderungen voneinander getrennt und wiederverbunden werden.

Mit diesen bekannten Kassettenanordnungen ist ein modularer, allen heutigen Anforderungen genügender Aufbau nicht zu gewährleisten.

Es ist deshalb Aufgabe der vorliegenden Erfindung, eine Kassettenanordnung der vorgenannten Art zu schaffen, welche individuell zusammenstellbar, leicht zu handhaben und sicher und funktionell ist.

Dies wird erfindungsgemäss erreicht durch eine Mehrzahl module und modular zu einem Block miteinander stapelbar verbindbare Kassetten in Form von Spleisskassetten und/oder Kopplerkassetten und/oder Ueberlängenkassetten; wobei die Kassetten untereinander und/oder zusammen mit Deckelteilen über Scharniermittel aufklappbar und verriegelbar miteinander verbunden sind, wobei die Kassetten der Aufnahme von Kopplermodulen und/oder Spleissmodulen resp. die Ueberlängenkassetten der Aufnahme eines einsetzbaren Radiusbegrenzers dienen; und wobei sowohl die Bündelader als auch die Schaltadern im wesentlichen tangential zu den inneren Arbeitsreserveschleifen der Adern verlaufen und zudem die Schaltadern intern oder extern von einer Kassette in die andere überführbar sind.

Beispielsweise Ausführungsformen des Erfindungsgegenstandes sind nachfolgend anhand der Zeichnung näher erläutert. Es zeigen:
- Fig. 1: in schaubildartiger Explosiv-Darstellung eine erfindungsgemässe Kassettenanordnung und
- Fig. 2, 3 und 4: Ausführungsvarianten von Anwendungsbeispielen der erfindungsgemässen Kassettenanordnung in schematischer Draufsicht und Seitenansicht.

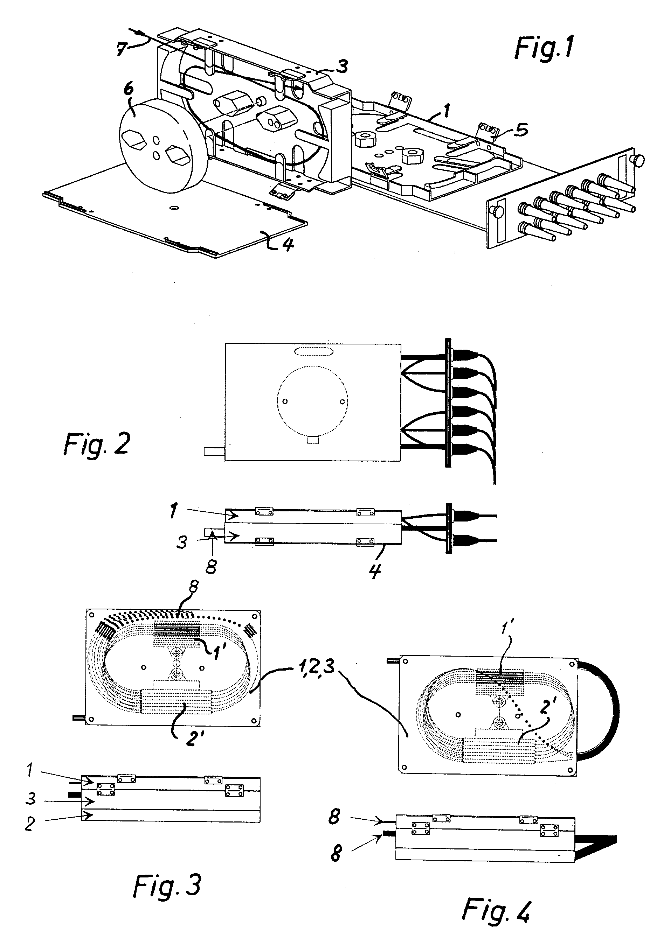

Gemäss den Darstellungen umfasst die Kassettenanordnung zum Verbinden und Verzweigen von Lichtwellenleitern eine Mehrzahl module und modular zu einem Block miteinander stapelbar verbindbare Kassetten 1,2 und 3 in Form von Spleisskassetten 1 und/oder Kopplerkassetten 2 (Fig. 3 und 4) und/oder Ueberlängenkassetten 3. Hierbei sind die Kassetten untereinander und/oder zusammen mit Deckelteilen 4 über Scharniermittel 5 aufklappbar und verriegelbar miteinander verbunden.

Ansich können die Scharniermittel 5 von beliebiger Bauart sein. Um aber die Gehäuse-Teile nicht nur scharnierartig zu verbinden, sondern auch beliebig und rasch voneinander trennen zu können, wird hier ein Verbindungselement 5 verwendet, das sowohl als Scharnier als auch als Verschlussriegel für aufklappbare Gehäuse- und Deckelteile sowie als Verbindungssteg von aufeinander gesetzten Gehäuseteilen dient.

Ein solches Scharniermittel ist im genannten EP-Patent 0 288 808 der gleichen Anmelder ausführlich beschrieben.

Nach Bedarf können die Kassetten der Aufnahme von Kopplermodulen 2' und/oder Spleissmodulen 1' resp. die Ueberlängenkassetten der Aufnahme eines einsetzbaren Radiusbegrenzers 6 dienen.

Zudem weisen die Kassetten randnahe und bodenseitige Oeffnungen derart auf, dass die Bündelader 7 als auch die Schaltadern 8 im wesentlichen tangential zu den inneren Arbeitsreserveschleifen der Adern verlaufen und zudem die Schaltadern 8 intern (Fig. 3) oder extern (Fig. 4) von einer Kassette in die andere überführbar sind.

Die Vorteile der erfindungsgemässen Kassettenanordnung sind Die Vorteile der erfindungsgemässen Kassettenanordnung sind unübersehbar. Insbesondere können beliebig viele und nach Bedarf unterschiedliche Einzelkassetten zusammengefügt werden, vorteilhaft unter Zwischenanordnung von Ueberlängenkassetten sowohl für Bündelader als auch für Schaltadern. Hierbei erlauben die Ueberlängenkassetten mit den Radiusbegrenzern zunächst ein Herausziehen der Adern etwa um 30 cm, um dann den Ausbau der Kassettenanordnung ungehindert vornehmen zu können. Ein Oeffnen der Ueberlängenkassette gestattet dann die Herausnahme der gesamten Reserve und das Ueberführen der Kassettenanordnung zu einem entfernten Montagetisch. An keiner Stelle der Anordnung kann dabei ein Minimalradius unterschritten werden.

## Patentansprüche

1. Kassettenanordnung zum Verbinden und Verzweigen von Lichtwellenleitern der Tele- und Datenkommunikation, gekennzeichnet durch eine Mehrzahl module und modular zu einem Block miteinander stapelbar verbindbare Kassetten (1,2,3) in Form von Spleisskassetten (1) und/oder Kopplerkassetten (2) und/oder Ueberlängenkassetten (3);
wobei die Kassetten untereinander und/oder zusammen mit Deckelteilen (4) über Scharniermittel (5) aufklappbar und verriegelbar miteinander verbunden sind,
wobei die Kassetten der Aufnahme von Kopplermodulen (2') und/oder Spleissmodulen (1') resp. die Ueberlängenkassetten der Aufnahme eines einsetzbaren Radiusbegrenzers (6) dienen; und wobei
sowohl die Bündelader (7) als auch die Schaltadern (8) im wesentlichen tangential zu den inneren Arbeitsreserveschleifen der Adern verlaufen und zudem die Schaltadern (8) intern oder extern von einer Kassette in die andere überführbar sind.
